(19) Europäisches Patentamt
European Patent Office
Office européen des brevets

(11) **EP 3 327 406 B1**

(12) **EUROPÄISCHE PATENTSCHRIFT**

(45) Veröffentlichungstag und Bekanntmachung des Hinweises auf die Patenterteilung:
**17.06.2020  Patentblatt 2020/25**

(51) Int Cl.:
*G01F 1/84* *(2006.01)*     *G01F 25/00* *(2006.01)*

(21) Anmeldenummer: **17198025.3**

(22) Anmeldetag: **24.10.2017**

(54) **VERFAHREN ZUM BETREIBEN EINES CORIOLIS-MASSEDURCHFLUSSMESSGERÄTS UND CORIOLIS-MASSEDURCHFLUSSMESSGERÄT**

METHOD FOR OPERATING A CORIOLIS MASS FLOW METER AND CORIOLIS MASS FLOW METER

PROCÉDÉ DE FONCTIONNEMENT D'UN DÉBITMÈTRE MASSIQUE À ACCÉLÉRATION DE CORIOLIS ET DÉBITMÈTRE MASSIQUE À ACCÉLÉRATION DE CORIOLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2016   DE 102016122241**

(43) Veröffentlichungstag der Anmeldung:
**30.05.2018   Patentblatt 2018/22**

(73) Patentinhaber: **Krohne Messtechnik GmbH 47058 Duisburg (DE)**

(72) Erfinder:
• **KUNZE, Johannes**
  **44892 Bochum (DE)**
• **STORM, Ralf**
  **45131 Essen (DE)**

(74) Vertreter: **Gesthuysen Patent- und Rechtsanwälte Patentanwälte Huyssenallee 100 45128 Essen (DE)**

(56) Entgegenhaltungen:
**EP-A2- 1 845 346     WO-A1-98/07009
WO-A1-99/39164     WO-A1-2007/097760**

EP 3 327 406 B1

**Beschreibung**

Die Erfindung geht aus von einem Verfahren zum Betreiben eines Coriolis-Massedurchflussmessgeräts, wobei das Coriolis-Massedurchflussmessgerät wenigstens ein Messrohr, wenigstens einen Schwingungserzeuger, wenigstens zwei Schwingungsaufnehmer und wenigstens eine Steuer- und Auswerteeinheit aufweist, wobei der Schwingungserzeuger und die Schwingungsaufnehmer an dem Messrohr angeordnet sind, wobei das Messrohr von einem Medium durchströmbar ist, wobei der Schwingungserzeuger das Messrohr in eine harmonische Schwingung mit der Anregungsfrequenz $f_0$ und der Anregungsamplitude $A_0$ versetzt, wobei der erste und der zweite Schwingungsaufnehmer die Schwingung des Messrohrs erfassen, wobei der erste Schwingungsaufnehmer die Schwingung als erstes Messsignal an die Steuer- und Auswerteeinheit weiterleitet und wobei der zweite Schwingungsaufnehmer die Schwingung als zweites Messsignal an die Steuer- und Auswerteeinheit weiterleitet und wobei aus dem ersten Messsignal und/oder dem zweiten Messsignal wenigstens ein Vergleichsmesssignal bestimmt wird.

Darüber hinaus geht die Erfindung aus von einem Coriolis-Massedurchflussmessgerät mit wenigstens einem Messrohr, wenigstens einem Schwingungserzeuger, wenigstens zwei Schwingungsaufnehmern und wenigstens einer Steuer- und Auswerteeinheit, wobei der Schwingungserzeuger und die Schwingungsaufnehmer an dem Messrohr angeordnet sind, wobei der Schwingungserzeuger derart ausgestaltet ist, dass er im Betrieb das Messrohr in eine harmonische Schwingung mit der Anregungsfrequenz $f_0$ und der Anregungsamplitude $A_0$ versetzt, wobei der erste und der zweite Schwingungsaufnehmer derart ausgestaltet sind, dass sie im Betrieb die Schwingung des Messrohrs erfassen, wobei der erste Schwingungsaufnehmer die Schwingung als erstes Messsignal an die Steuer- und Auswerteeinheit weiterleitet und wobei der zweite Schwingungsaufnehmer die Schwingung als zweites Messsignal an die Steuer- und Auswerteeinheit weiterleitet und wobei aus dem ersten Messsignal und/oder dem zweiten Messsignal wenigstens ein Vergleichsmesssignal bestimmt wird.

Aus dem Stand der Technik ist es bekannt, den Massedurchfluss eines durch ein Messrohr strömenden Mediums nach dem Coriolis-Prinzip zu bestimmen. Bekannte Coriolis-Massedurchflussmessgeräte weisen dazu wenigstens einen Schwingungserzeuger, der das Messrohr in Schwingung versetzt, und wenigstens zwei Schwingungsaufnehmer auf, die ein- und auslaufseitig die Schwingung des Messrohrs erfassen. Fließt ein Medium durch das Messrohr, so wirkt auf das Medium die Coriolis-Beschleunigung, welche letztendlich einen Phasenunterschied der ein- und auslaufseitigen Schwingung des Messrohrs zur Folge hat. Aus diesem Phasenunterschied lässt sich der Massedurchfluss bestimmen.

Vorteilhaft ist es, wenn sowohl die Anregungsfrequenz als auch die Frequenz, auf der der Phasenunterschied zwischen dem ein- und auslaufseitigen Signal bestimmt wird, der Grundresonanzfrequenz des Messrohrs in einem Bewegungsmode entspricht. Oft wird das Messrohr durch den Schwingungserzeuger in einem Anregungsmode zur Schwingung angeregt (zentraler Schwingungsbauch zwischen ein- und auslaufseitigen Knotenpunkten des Messrohrs), wobei der Einfluss der Corioliskraft eine überlagerte Schwingung des Messrohrs in dem nächst höheren Schwingungsmode des Messrohrs bewirkt (zusätzlicher zentraler Schwingungsnullpunkt des Messrohrs). Diese Bewegungen sind selbstverständlich einander überlagert. Zur Bestimmung des Phasenunterschiedes bzw. zur Auswertung der gemessenen Schwingung kann das gemessene Signal beispielsweise durch einen Bandpassfilter geleitet werden, der im Wesentlichen für die Grundfrequenz einer der angeregten Schwingungsmoden durchlässig ist, also beispielsweise für die Anregungsfrequenz oder die Grundresonanzfrequenz höherer Schwingungsmoden. Zudem kann bei der Signalauswertung ebenfalls der Gleichspannungsanteil bestimmt und berücksichtigt werden, um beispielsweise Isolationsfehler zu detektieren.

Ebenfalls bekannt ist es, dass sich Störungen und/oder fehlerhafte Zustände des Messgerätes und/oder des Messrohrs auf das Schwingverhalten des Messrohrs auswirken. Durch die Analyse des Schwingverhaltens können daher vorhandene Störungen beispielsweise aufgrund von Ablagerung oder Korrosion des Messrohrs erfasst werden.

Die Druckschrift DE 10 2008 059 920 A1 offenbart ein Verfahren zur Identifikation von systembeschreibenden Parametern, das während des Betriebs im geschlossenen Regelkreis durchgeführt werden kann. Dazu wird eine Sollgröße, wie beispielsweise die Phase zwischen dem Anregungssignal und dem Messsignal, variiert. Durch die Variation wird wenigstens ein Parameter der angeregten Eigenform, der eine Auswirkung auf das aufgenommene Messsignal zeigt, des Messrohrs selektiv bestimmt.

Die Druckschrift DE 10 2011 086 395 A1 offenbart ein Verfahren zum Überwachen der Schwingungseigenschaften in einem Coriolis-Massedurchflussmessgerät, um insbesondere Änderungen aufgrund von Abrasion, Korrosion oder Beschichtung des Messrohrs zu erfassen. Dazu wird ein Schwingungssystem durch ein digitales Modell, das mindestens einen anpassbaren Parameter aufweist, simuliert. Das Signal zur Anregung der Schwingung weist kurzzeitige Signalmodulationen auf, wobei die Auswirkungen dieser kurzzeitigen Signalmodulationen auf das Schwingungssystem und auf das digitale Modell erfasst werden. Zudem wird untersucht, ob der anpassbare Parameter einen Grenzwert überschreitet.

Die Druckschrift WO 99/39164 A1 offenbart ein Verfahren zum Betreiben eines Coriolis-Massedurchflussmessgeräts gemäß dem Oberbegriff des vorliegenden unabhängigen Patentanspruchs 1.

Diese zuvor beschriebenen Verfahren weisen jedoch den Nachteil auf, dass Störungen, die nichtlineare Änderungen des Schwingungsverhaltens zur Folge haben, also beispielsweise nicht oder nicht nur auf der Anregungsfrequenz nachweisbar sind, nicht erkannt werden oder nur mit großem Aufwand erkannt werden können.

Solche nichtlinearen Störungen treten beispielsweise auf bei einer schlechten Ausrichtung des Schwingungserzeugers und/oder der Schwingungsaufnehmer oder wenn sich der Schwingungserzeuger und/oder die Schwingungsaufnehmer mechanisch gelöst haben. Zudem treten solche nichtlinearen Störungen auf, wenn die Messrohrgeometrie beispielsweise in Folge einer Überhitzung oder in Folge eines Sturzes von der Sollgeometrie abweicht. Ausgehend von dem zuvor dargelegten Stand der Technik liegt der Erfindung die Aufgabe zugrunde, ein Verfahren zum Betreiben eines Coriolis-Massedurchflussmessgerätes anzugeben, mit dem sich insbesondere nichtlineare Störungen erfassen lassen. Daneben liegt der Erfindung die Aufgabe zugrunde, ein entsprechendes Coriolis-Massedurchflussmessgerät anzugeben.

Gemäß einer ersten Lehre wird die zuvor genannte Aufgabe dadurch gelöst, dass ausgehend von der Anregungsfrequenz $f_0$ und der Anregungsamplitude $A_0$ bei wenigstens einer Auswertefrequenz ein Erwartungswert der Amplitude und/oder der Phase und/oder wenigstens einer daraus abgeleiteten Größen bestimmt wird, wobei die Auswertefrequenz der Anregungsfrequenz $f_0$ und/oder wenigstens einer harmonischen Oberschwingung der Anregungsfrequenz $f_0$ entspricht, dass die Amplitude und/oder die Phase und/oder die daraus abgeleitete Größe des Vergleichsmesssignals ausschließlich bei der Auswertefrequenz erfasst wird,
dass der Erwartungswert der Amplitude und/oder der Phase und/oder der daraus abgeleiteten Größe mit dem entsprechenden Wert des Vergleichsmesssignals verglichen und ein Maß für die Abweichung bestimmt wird und
dass eine Meldung ausgegeben wird, wenn die Abweichung des Erwartungswertes mit dem entsprechenden Wert des Vergleichsmesssignals einen oberen Grenzwert überschreitet oder einen unteren Grenzwert unterschreitet.

Erfindungsgemäß wird der Umstand genutzt, dass nichtlineare Störungen eines harmonisch angeregten linearen Systems zu nichtlinearen Reaktionssignalen führen, sich also nicht oder nicht nur auf die Amplitude und/oder die Phase der im linearen Fall gemessenen Schwingung auswirken; sie produzieren weitere Signalanteile, wie beispielsweise ein höheres Rauschen oder Signale mit anderen Frequenzen im Vergleichsmesssignal. Das erfindungsgemäße Verfahren beruht insofern auf einem Vergleich der Erwartungswerte der relevanten Größen mit den tatsächlich gemessenen Werten der entsprechenden Größen. Vorzugsweise sind die zuvor genannten relevanten Größen solche Größen, durch die eine Nichtlinearität des Vergleichsmesssignals messbar gemacht werden kann.

Besonders bevorzugt wird das Vergleichsmesssignal nicht nur im Bereich der Anregungsfrequenz $f_0$ vermessen, sondern ebenfalls auf das Vorhandensein von weiteren Frequenzanteilen im Bereich der harmonischen Oberschwingungen der Anregungsfrequenz $f_0$ untersucht. Diese Ausgestaltung grenzt sich von der naheliegenden, jedoch sehr aufwendigen Lösung der Analyse des Vergleichsmesssignals mittels einer Fourieranalyse dadurch ab, dass eine Analyse des Vergleichsmesssignals ausschließlich in wohldefinierten Frequenzbereichen, nämlich in dem Bereich um die Anregungsfrequenz $f_0$ und im Bereich um harmonische Oberschwingungen der Anregungsfrequenz $f_0$ herum, durchgeführt wird. Diese Analyse bei definierten Frequenzbereichen ist im Gegensatz zu einer Fourieranalyse besonders einfach, wobei gleichzeitig eine hohe Auflösung gewährleistet werden kann.

Die Auswertung des Vergleichsmesssignals im Bereich der Anregungsfrequenz $f_0$ und/oder im Bereich der harmonischen Oberschwingung kann beispielsweise dadurch erfolgen, dass das Vergleichsmesssignal durch jeweils einen Bandpassfilter, der im Wesentlichen durchlässig für die Anregungsfrequenz $f_0$ bzw. für die Frequenz einer interessierenden harmonischen Oberschwingung ist, gefiltert wird.

Dabei wird unter der Angabe "im Bereich" ein Frequenzbereich verstanden, der sich bis zu $\pm$ 10% oder $\pm$ 5% oder $\pm$ 1% der Auswertefrequenz um die Auswertefrequenz erstreckt. Insofern berücksichtigt diese Angabe, dass signalverarbeitende Vorgänge, wie beispielsweise die Filterung des Vergleichsmesssignal durch einen Bandpassfilter, stets technisch bedingt mit Ungenauigkeiten behaftet sind, die eine gewisse Unschärfe der zu filternden Frequenz zur Folge haben.

Im Ergebnis kann der Zustand des Messsystems, also der Zustand des Coriolis-Massedurchflussmessgeräts, durch das erfindungsgemäße Verfahren besonders einfach überwacht und Störungen besonders einfach nachgewiesen werden.

Dabei entspricht die Anregungsfrequenz $f_0$ gemäß einer besonders bevorzugten Ausgestaltung des Verfahrens einer Resonanzfrequenz des Messrohrs.

Der Erwartungswert der Amplitude und/oder der Phase und/oder der daraus abgeleiteten Größe kann mit jeder Messung neu bestimmt werden oder vor einem Messvorgang, beispielsweise im Rahmen einer Kalibration, festgelegt werden oder bei Inbetriebnahme des Coriolis-Massedurchflussmessgeräts festgelegt werden.

Gemäß einer besonders bevorzugten Ausgestaltung ist die wenigstens eine aus der Amplitude abgeleitete Größe die Leistung und/oder ein Wert für die harmonische Verzerrung (THD-Wert) und/oder ein Wert für die harmonische Verzerrung inklusive dem Rauschen (THD+N-Wert) und/oder der Klirrfaktor und/oder das Signal-zu-Rausch-Verhältnis (SNR).

Der THD-Wert ist ein Maß für harmonische Verzerrung des Vergleichsmesssignals. Der THD-Wert ist definiert als das Verhältnis der summierten Leistungen $P_h$ der Oberschwingungen zur Leistung $P_0$ auf der Anregungsfrequenz $f_0$:

$$\mathrm{THD}_\% = \mathrm{P_h} \,/\, \mathrm{P_0} \cdot 100.$$

Zur Bestimmung des THD-Wertes werden daher die Signalleistungen sowohl auf der Anregungsfrequenz $f_0$ als auch auf wenigstens einer harmonischen Oberschwingung der Anregungsfrequenz $f_0$ bestimmt und dann miteinander gemäß dem obigen Zusammenhang in Beziehung zueinander gesetzt. Anschließend werden der Erwartungswert des THD-Wertes und der THD-Wert des Vergleichsmesssignals miteinander in Beziehung gesetzt, um die Abweichung der THD-Werte zu bestimmen.

Bei der Bestimmung des THD+N-Wertes wird die Summe der Störleistungen $P_{stör}$, also die Störleistung auf wenigstens einer harmonischen Oberschwingung $P_h$ und die Störleistung des Rauschens $P_{rausch}$ mit der Gesamtleistung des Vergleichsmesssignals $P_{ges}$ verglichen:

$$\mathrm{THD+N}_\% = \ \mathrm{P_{stör}} \,/\, \mathrm{P_{ges}} \cdot 100 = (\mathrm{P_h} + \mathrm{P_{rausch}}) \,/\, \mathrm{P_{ges}} \cdot 100.$$

Alternativ kann auch das Verhältnis aus der Leistung $P_0$ zur Gesamtleistung des Vergleichsmesssignals $P_{ges}$ gebildet werden.

Alternativ können auch die Amplitudenverhältnisse statt der Leistungsverhältnisse miteinander gemäß den zuvor beschriebenen Zusammenhängen in Beziehung gesetzt und als THD-Werte bezeichnet werden.

Der Klirrfaktor ist ebenfalls ein Maß für die nichtlineare Verzerrung eines harmonischen Signals. Im Detail gibt der Klirrfaktor den Anteil der harmonischen Oberschwingungen an dem Gesamtsignal an. Dabei bezieht sich der Klirrfaktor auf die Effektivwerte der Amplituden.

Gemäß einer weiteren vorteilhaften Ausgestaltung des erfindungsgemäßen Verfahrens ist das Vergleichsmesssignal das erste Messsignal oder das zweite Messsignal oder ein Summensignal aus dem ersten Messsignal und dem zweiten Messsignal oder ein Differenzsignal aus dem ersten und dem zweiten Messsignal oder ein weiterer funktionaler Zusammenhang zwischen dem ersten und dem zweiten Messsignal. Denkbar ist beispielsweise ebenfalls die Bildung eines Quotienten aus dem ersten und dem zweiten Messsignal.

Zudem ist es gemäß einer weiteren Ausgestaltung ebenfalls vorteilhaft, wenn das Coriolis-Massedurchflussmessgerät mehr als zwei Schwingungsaufnehmer, also drei oder vier oder fünf Schwingungsaufnehmer, aufweist, die an einem Messrohr angeordnet sind und die die Schwingung als drittes oder viertes oder fünftes Messsignal an die Steuer- und Auswerteeinheit weiterleiten, und wenn das Vergleichssignal aus dem ersten und/oder dem zweiten und/oder dem dritten und/oder dem vierten und/oder dem fünften Messsignal bestimmt wird.

Daneben ist es zudem vorteilhaft, wenn das Coriolis-Massedurchflussmessgerät wenigstens zwei Messrohre, wenigstens zwei Schwingungserzeuger und wenigstens vier Schwingungsaufnehmer aufweist, wobei jeweils ein Schwingungserzeuger und jeweils zwei Schwingungsaufnehmer an einem Messrohr angeordnet sind und im Betrieb das jeweilige Messrohr in eine harmonische Schwingung mit der Anregungsfrequenz $f_0$ und der Anregungsamplitude $A_0$ versetzt, wobei der erste und der zweite Schwingungsaufnehmer die Schwingung des den Schwingungsaufnehmern zugeordneten Messrohrs erfassen, wobei der erste Schwingungsaufnehmer die Schwingung als erstes Messsignal an die Steuer- und Auswerteeinheit weiterleitet und wobei der zweite Schwingungsaufnehmer die Schwingung als zweites Messsignal an die Steuer- und Auswerteeinheit weiterleitet, wobei der dritte Schwingungsaufnehmer die Schwingung des Messrohrs als drittes Messsignal an die Steuer- und Auswerteeinheit weiterleitet, wobei der vierte Schwingungsaufnehmer die Schwingung des Messrohrs als viertes Messsignal an die Steuer- und Auswerteeinheit weiterleitet und wobei aus dem ersten Messsignal und/oder dem zweiten Messsignal und/oder dem dritten Messsignal und/oder dem vierten Messsignal wenigstens ein Vergleichsmesssignal bestimmt wird, und dieses Vergleichssignal gemäß dem erfindungsgemäßen Verfahren mit dem Erwartungssignal verglichen wird.

Gemäß einer weiteren Ausgestaltung ist ebenfalls vorteilhaft, wenn mehr als ein Erwartungswert der Amplitude und/oder der Phase und/oder der daraus abgeleitete Größe bestimmt wird bzw. werden und wenn die Erwartungswerte der Amplitude und/oder der Phase und/oder der daraus abgeleitete Größe gleichzeitig oder zeitlich nacheinander mit den entsprechenden Werten des Vergleichsmesssignals verglichen werden.

Weiterhin ist es vorteilhaft, wenn wenigstens ein zusätzlicher Erwartungswert der Amplitude und/oder der Phase und/oder der daraus abgeleiteten Größe bei einer Auswertefrequenz, die in einem Frequenzintervall um die Anregungsfrequenz $f_0$ liegt, wobei das Frequenzintervall sich um $\pm$ 20 % bis 50 % der Anregungsfrequenz um die Anregungsfrequenz $f_0$ erstreckt, und/oder bei einer Auswertefrequenz, die in einem Frequenzintervall um eine harmonische Oberschwingung der Anregungsfrequenz $f_0$ liegt, wobei das Frequenzintervall sich um $\pm$ 20 % bis 50 % der Frequenz der harmonischen Oberschwingung um die Frequenz der harmonischen Oberschwingung erstreckt, und dass die Amplitude und/oder die Phase und/oder die daraus abgeleitet Größe des Vergleichsmesssignals bei der Auswertefrequenz erfasst und mit dem entsprechenden Erwartungssignal verglichen wird. Diese Ausgestaltung hat den Vorteil, dass nicht nur Störanteile im Bereich der Anregungsfrequenz und im Bereich der harmonischen Oberschwingungen der Anregungsfrequenz erfasst werden können, sondern auch Störanteile, die Frequenzen aufweisen, die in der Nähe der Anregungsfrequenz und/oder der harmonischen Oberschwingungen liegen, wobei gleichzeitig die Einfachheit des Verfahrens, also der Verzicht auf eine komplette Fouriertransformation des Vergleichsmesssignals, erhalten bleibt.

Gemäß einer weiteren vorteilhaften Ausgestaltung erfolgt die Bestimmung des Erwartungswertes der Amplitude und/oder der Phase und/oder der daraus abgeleiteten Größe und der Vergleich mit dem entsprechenden Wert des Vergleichsmesssignals periodisch oder sie wird manuell ausgelöst. Durch eine periodische Überwachung können sich im Laufe der Zeit ergebende Veränderungen, wie beispielsweise ein mechanisches Ablösen der Schwingungsaufnehmer oder eine Dejustierung des Schwingungserzeugers und/oder der Schwingungsaufnehmer, zuverlässig erkannt werden. Alternativ kann das erfindungsgemäße Verfahren auch auf Verdacht manuell ausgelöst werden.

Weist das Coriolis-Massedurchflussmessgerät gemäß einer nächsten Ausgestaltung eine Anzeigeeinheit auf, so ist besonders vorteilhaft, wenn die Meldung, in dem Fall, indem die Abweichung zwischen dem Erwartungswert und dem entsprechenden Wert des Vergleichsmesssignals einen oberen Grenzwert überschreitet oder einen unteren Grenzwert unterschreitet, über die Anzeigeeinheit ausgegeben wird. Dann ist die Meldung für den Nutzer unmittelbar wahrnehmbar und der Nutzer kann entsprechende Maßnahmen zur Behebung der Ursache ergreifen.

Zudem ist es vorteilhaft, wenn in der Steuer- und Auswerteeinheit eine Vielzahl von Störsignalen mit Werten für die Amplitude und/oder die Phase und/oder die Frequenz und/oder wenigstens einer daraus abgeleiteten Größe hinterlegt ist, wobei die einzelnen Störsignale vorzugsweise jeweils einer Ursache zugeordnet sind. Gemäß einer weiteren Ausgestaltung des Verfahrens werden die Amplitude und/oder die Phase und/oder die daraus abgeleitete Größe mit den Werten der Störsignale verglichen und sofern die Amplitude und/oder die Phase und/oder die daraus abgeleitete Größe des Vergleichsmesssignals mit den entsprechenden Werten der Störsignale im Wesentlichen übereinstimmen, wird eine zweite Meldung ausgegeben, in der eine mögliche Ursache der Störung angegeben wird.

Diese Ausgestaltung ist besonders vorteilhaft, da dem Nutzer neben der Information, dass eine Störung vorliegt, ebenfalls mitgeteilt wird, welche mögliche Ursache die Störung hat.

Dabei kann die Hinterlegung der Störsignale dadurch passieren, dass Vergleichsmesssignale, die eine Störung aufweisen, also bei denen die Abweichung des Erwartungswertes und des entsprechenden Wertes des Vergleichsmesssignals einen oberen Grenzwert überschreitet oder einen unteren Grenzwert unterschreitet, wobei die Ursache Störung durch den Nutzer identifiziert werden kann, zusammen mit der Ursache in der Steuer- und Auswerteeinheit gespeichert werden.

Gemäß einer zweiten Lehre der vorliegenden Erfindung wird die eingangsdargelegte Aufgabe durch ein anfangs genanntes Coriolis-Massedurchflussmessgerät dadurch gelöst, dass die Steuer- und Auswerteeinheit derart ausgestaltet ist, dass im Betrieb ausgehend von der Anregungsfrequenz $f_0$ und der Anregungsamplitude $A_0$ bei wenigstens einer Auswertefrequenz ein Erwartungswert der Amplitude und/oder der Phase und/oder wenigstens einer daraus abgeleiteten Größe bestimmt wird, wobei die Auswertefrequenz der Anregungsfrequenz $f_0$ und/oder wenigstens einer harmonischen Oberschwingung der Anregungsfrequenz $f_0$ entspricht,

dass die Amplitude und/oder die Phase und/oder die daraus abgeleitete Größe des Vergleichsmesssignals ausschließlich bei der Auswertefrequenz erfasst wird,

dass der Erwartungswert der Amplitude und/oder der Phase und/oder der daraus abgeleiteten Größe mit dem entsprechenden Wert des Vergleichsmesssignals verglichen und ein Maß für die Abweichung bestimmt wird und

dass eine Meldung ausgegeben wird, wenn die Abweichung des Erwartungswertes mit dem entsprechenden Wert des Vergleichsmesssignals einen oberen Grenzwert überschreitet oder einen unteren Grenzwert unterschreitet.

Besonders bevorzugt ist das Coriolis-Massedurchflussmessgerät derart ausgestaltet, dass es im Betrieb eines der zuvor beschriebenen Verfahren durchführt.

Im Einzelnen gibt es nun eine Vielzahl von Möglichkeiten, das erfindungsgemäße Verfahren und das erfindungsgemäße Coriolis-Massedurchflussmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen

Fig. 1     ein erstes Ausführungsbeispiel eines erfindungsgemäßen Verfahrens,

Fig. 2     ein zweites Ausführungsbeispiel eines erfindungsgemäßen Verfahrens und

Fig. 3     ein erstes Ausführungsbeispiel eines erfindungsgemäßen Coriolis-Massedurchflussmessgeräts in schematischer Ansicht.

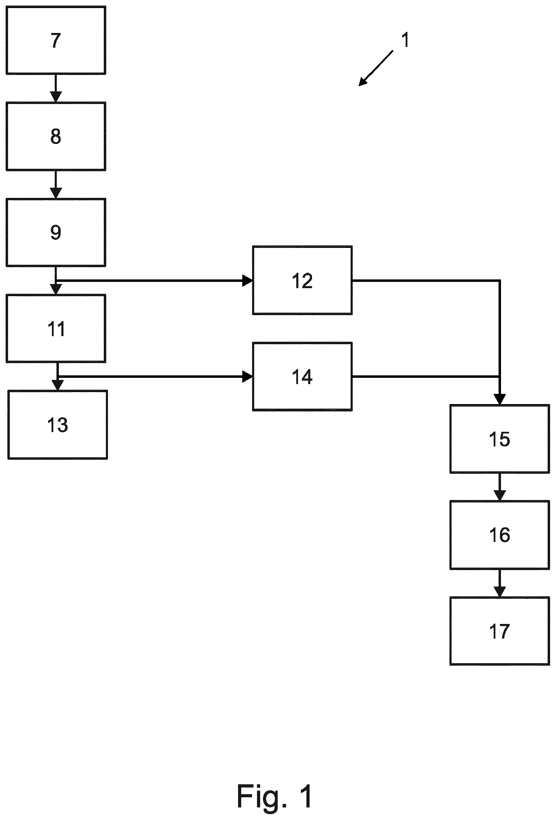

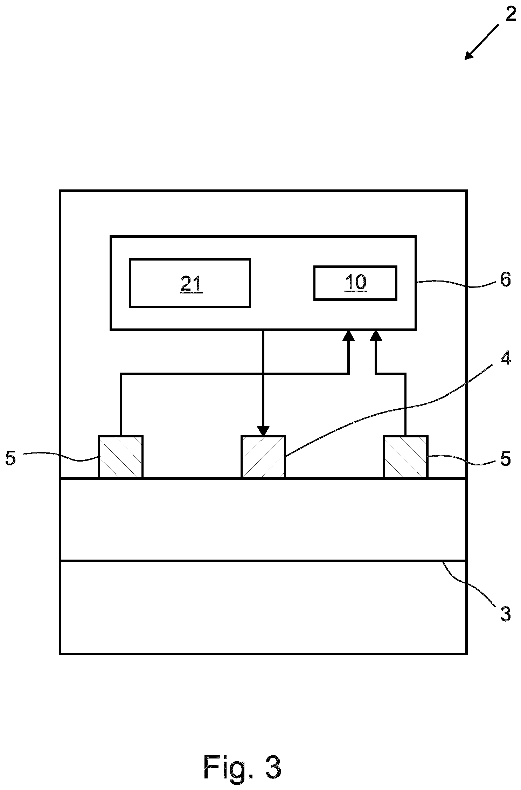

In Fig. 1 ist dargestellt ein erstes Ausführungsbeispiel eines Verfahrens 1 zum Betreiben eines Coriolis-Massedurchflussmessgeräts 2, welches beispielsweise in Fig. 3 dargestellt ist. Das Coriolis-Massedurchflussmessgerät 2 weist wenigstens ein Messrohr 3, wenigstens einen Schwingungserzeuger 4, wenigstens zwei Schwingungsaufnehmer

und wenigstens eine Steuer- und Auswerteeinheit 6 auf, wobei der Schwingungserzeuger 4 und die Schwingungsaufnehmer 5 an dem Messrohr 3 angeordnet sind, wobei das Messrohr 3 von einem Medium durchströmt wird.

In einem ersten Schritt 7 des dargestellten Verfahrens 1 versetzt der Schwingungserzeuger 4 das Messrohr 3 in eine harmonische Schwingung mit der Anregungsfrequenz $f_0$ und der Anregungsamplitude $A_0$. Dabei ist anzumerken, dass das Messrohr 3 während des gesamten Verfahrens 1 schwingt, und insofern der Schritt der Anregung 7 während des Verfahrens 1 fortdauert.

In einem nächsten Schritt 8 erfassen der erste und der zweite Schwingungsaufnehmer 5 die Schwingung des Messrohrs 3 und der erste Schwingungsaufnehmer 5 leitet die Schwingung als erstes Messsignal an die Steuer- und Auswerteeinheit 6 weiter und der zweite Schwingungsaufnehmer 5 leitet die Schwingung als zweites Messsignal an die Steuer- und Auswerteeinheit 6 weiter.

Anschließend wird in einem weiteren Schritt 9 aus dem ersten Messsignal und dem zweiten Messsignal ein Vergleichsmesssignal 10 bestimmt. Im dargestellten Ausführungsbeispiel entspricht das Vergleichsmesssignal 10 dem ersten Messsignal.

In einem nächsten Schritt 11 werden die Amplitude und die Phase des Vergleichsmesssignals 10 bei der Anregungsfrequenz $f_0$ bestimmt. Gleichzeitig wird die gesamte Leistung $P_{ges}$ des Vergleichsmesssignals 10 bestimmt 12.

Aus der gemessenen Amplitude und der Phase sowie aus dem Vergleich mit dem zweiten Messsignal wird der Massendurchfluss des Mediums, das durch das Messrohr 3 strömt, bestimmt 13. Zudem wird aus der Amplitude bei der Anregungsfrequenz $f_0$ die Leistung $P_0$ des Vergleichsmesssignals 10 bestimmt 14. Aus der Gesamtleistung $P_{ges}$ und der Leistung $P_0$ des Vergleichsmesssignals 10 bei der Anregungsfrequenz $f_0$ wird in einem nächsten Schritt 15 der THD+N-Wert des Vergleichsmesssignals 10 bestimmt. Der THD+N-Wert wird in einem nächsten Schritt 16 mit einem hinterlegten Erwartungswert verglichen und die Abweichung zwischen dem THD+N-Wert und dem Erwartungswert wird durch Differenzbildung bestimmt 16.

Überschreitet die Abweichung einen oberen Grenzwert, so wird in einem nächsten Schritt 17 eine Warnmeldung ausgegeben.

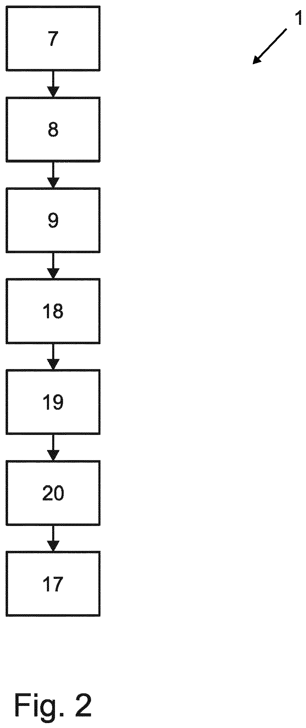

Fig. 2 zeigt ein zweites Ausführungsbeispiel eines Verfahrens 1 zum Betreiben eines Coriolis-Massedurchflussmessgeräts 2, wie es beispielsweise zuvor beschrieben und in Fig. 3 dargestellt ist. Zunächst wird in einem ersten Schritt 7 das Messrohr 3 in harmonische Schwingung mit der Anregungsfrequenz $f_0$ und der Amplitude $A_0$ angeregt. Die Schwingungsaufnehmer 5 erfassen die Schwingung und leiten sie als erstes und als zweites Messsignal an die Steuer- und Auswerteeinheit 6 weiter 8. Anschließend wird das Vergleichsmesssignal 10 bestimmt 9, das im dargestellten Ausführungsbeispiel dem ersten Messsignal entspricht.

Basierend auf der Anregungsfrequenz $f_0$ und der Amplitude $A_0$ wird ein Erwartungswert für den THD-Wert, also das Verhältnis der Leistungen $P_h$ zu $P_0$, bestimmt 18.

In einem anschließenden Schritt 19 wird der THD-Wert des Vergleichsmesssignals 10 bestimmt. Dazu wird die Amplitude des Vergleichsmesssignals auf der Anregungsfrequenz $f_0$ und auf der zweiten und der dritten harmonischen Oberschwingung bestimmt und daraus der THD-Wert berechnet.

In einem nächsten Schritt 20 wird der THD-Wert des Vergleichsmesssignals (10) mit dem Erwartungswert des THD-Wertes verglichen und es wird durch Differenzbildung ein Maß für die Abweichung bestimmt.

In einem nächsten Schritt 17 wird eine Warnmeldung ausgegeben, wenn die Abweichung einen oberer Grenzwert überschreitet.

Fig. 3 zeigt, wie bereits beschrieben, ein Ausführungsbeispiel eines Coriolis-Massedurchflussmessgeräts 2. Neben den bereits beschriebenen Komponenten weist das Coriolis-Massedurchflussmessgerät 2 eine Anzeigeeinheit 21 auf, über die die Warnmeldung im Falle einer Überschreitung eines oberen Grenzwertes oder eines Unterschreiten eines unteren Grenzwertes ausgegeben wird.

**Bezugszeichen**

1    Verfahren zum Betreiben eines Coriolis-Massedurchflussmessgeräts
2    Coriolis-Massedurchflussmessgerät
3    Messrohr
4    Schwingungserzeuger
5    Schwingungsaufnehmer
6    Steuer- und Auswerteeinheit
7    Anregung des Messrohrs
8    Erfassung der Schwingung und Weiterleitung des Messsignals
9    Bestimmung des Vergleichsmesssignals
10   Vergleichsmesssignal

11    Bestimmung der Amplitude und der Phase
12    Bestimmung der Gesamtleistung $P_{ges}$
13    Bestimmung des Massedurchflusses
14    Bestimmung der Leistung $P_0$ bei der Anregungsfrequenz $f_0$
15    Bestimmung des THD+N-Wertes des Vergleichsmesssignals
16    Vergleich des THD+N-Wertes mit Erwartungswert
17    Ausgabe einer Warnmeldung
18    Bestimmung des Erwartungswertes für den THD-Wert
19    Bestimmung des THD-Wertes des Vergleichsmesssignals
20    Vergleich des THD-Wertes des Vergleichsmesssignals mit dem Erwartungswert des THD-Wertes
21    Anzeigeeinheit


**Patentansprüche**

1.    Verfahren (1) zum Betreiben eines Coriolis-Massedurchflussmessgeräts (2), wobei das Coriolis-Massedurchflussmessgerät (2) wenigstens ein Messrohr (3), wenigstens einen Schwingungserzeuger (4), wenigstens zwei Schwingungsaufnehmer (5) und wenigstens eine Steuer- und Auswerteeinheit (6) aufweist, wobei der Schwingungserzeuger (4) und die Schwingungsaufnehmer (5) an dem Messrohr (3) angeordnet sind, wobei das Messrohr (3) von einem Medium durchströmbar ist, wobei der Schwingungserzeuger (4) das Messrohr (3) in eine harmonische Schwingung mit der Anregungsfrequenz $f_0$ und der Anregungsamplitude $A_0$ versetzt (7), wobei der erste und der zweite Schwingungsaufnehmer (5) die Schwingung des Messrohrs (3) erfassen und wobei der erste Schwingungsaufnehmer (5) die Schwingung als erstes Messsignal an die Steuer- und Auswerteeinheit (6) weiterleitet und wobei der zweite Schwingungsaufnehmer (5) die Schwingung als zweites Messsignal an die Steuer- und Auswerteeinheit (6) weiterleitet (8) und wobei aus dem ersten Messsignal und/oder dem zweiten Messsignal wenigstens ein Vergleichsmesssignal (10) bestimmt wird (9),
      **dadurch gekennzeichnet,**
      **dass** ausgehend von der Anregungsfrequenz $f_0$ und der Anregungsamplitude $A_0$ bei wenigstens einer Auswertefrequenz ein Erwartungswert der Amplitude und/oder der Phase und/oder wenigstens einer daraus abgeleiteten Größe bestimmt wird (18), wobei die Auswertefrequenz der Anregungsfrequenz $f_0$ und/oder wenigstens einer harmonischen Oberschwingung der Anregungsfrequenz $f_0$ entspricht,
      **dass** die Amplitude und/oder die Phase und/oder die daraus abgeleitete Größe des Vergleichsmesssignals (10) ausschließlich bei der Auswertefrequenz erfasst wird (11, 14, 15, 19),
      **dass** der Erwartungswert der Amplitude und/oder der Phase und/oder der daraus abgeleiteten Größe mit dem entsprechenden Wert des Vergleichsmesssignals (10) verglichen und ein Maß für die Abweichung bestimmt wird (20) und
      **dass** eine Meldung ausgegeben wird (17), wenn die Abweichung des Erwartungswertes mit dem entsprechenden Wert des Vergleichsmesssignals (10) einen oberen Grenzwert überschreitet oder einen unteren Grenzwert unterschreitet.

2.    Verfahren (1) nach Anspruch 1, **dadurch gekennzeichnet, dass** die wenigstens eine aus der Amplitude abgeleitete Größe die Leistung und/oder ein Wert für die harmonische Verzerrung (THD-Wert) und/oder ein Wert für die harmonische Verzerrung inklusive dem Rauschen (THD+N- Wert) und/oder der Klirrfaktor und/oder das Signal-zu-Rausch-Verhältnis (SNR) ist.

3.    Verfahren (1) nach einem der Ansprüche 1 oder 2, **dadurch gekennzeichnet, dass** das Vergleichsmesssignal (10) das erste Messsignal oder das zweite Messsignal oder ein Summensignal aus dem ersten Messsignal und dem zweiten Messsignal oder ein Differenzsignal aus dem ersten und dem zweiten Messsignal oder ein weiterer funktionaler Zusammenhang zwischen dem ersten und dem zweiten Messsignal ist.

4.    Verfahren (1) nach einem der Ansprüche 1 bis 3, **dadurch gekennzeichnet, dass** mehr als ein Erwartungswert der Amplitude und/oder der Phase und/oder der daraus abgeleitete Größe bestimmt wird bzw. werden und dass die Erwartungswerte der Amplitude und/oder der Phase und/oder der daraus abgeleitete Größe gleichzeitig oder zeitlich nacheinander mit den entsprechenden Werten des Vergleichsmesssignals (10) verglichen werden.

5.    Verfahren (1) nach einem der Ansprüche 1 bis 4, **dadurch gekennzeichnet, dass** wenigstens ein zusätzlicher Erwartungswert der Amplitude und/oder der Phase und/oder der daraus abgeleiteten Größe bei einer Auswertefrequenz, die in einem Frequenzintervall um die Anregungsfrequenz $f_0$ liegt, wobei das Frequenzintervall sich um $\pm$

20 bis 50 % der Anregungsfrequenz um die Anregungsfrequenz $f_0$ erstreckt, und/oder bei einer Auswertefrequenz, die in einem Frequenzintervall um die harmonische Oberschwingung der Anregungsfrequenz $f_0$ liegt, wobei das Frequenzintervall sich um $\pm$ 20 bis 50 % der Frequenz der harmonischen Oberschwingung um die Frequenz der harmonischen Oberschwingung erstreckt, bestimmt wird und dass die Amplitude und/oder die Phase und/oder die daraus abgeleitet Größe des Vergleichsmesssignals (10) bei der Auswertefrequenz erfasst und mit dem entsprechenden Erwartungssignal verglichen wird.

6. Verfahren (1) nach einem der Ansprüche 1 bis 5, **dadurch gekennzeichnet, dass** die Bestimmung des Erwartungswertes der Amplitude und/oder der Phase und/oder der daraus abgeleiteten Größe und der Vergleich mit dem entsprechenden Werte des Vergleichsmesssignals (10) periodisch erfolgt oder manuell ausgelöst wird.

7. Coriolis-Massedurchflussmessgerät (2) mit wenigstens einem Messrohr (3), wenigstens einem Schwingungserzeuger (4), wenigstens zwei Schwingungsaufnehmern (5) und wenigstens einer Steuer- und Auswerteeinheit (6), wobei der Schwingungserzeuger (4) und die Schwingungsaufnehmer (5) an dem Messrohr (3) angeordnet sind, wobei der Schwingungserzeuger (4) derart ausgestaltet ist, dass er im Betrieb das Messrohr (3) in eine harmonische Schwingung mit der Anregungsfrequenz $f_0$ und der Anregungsamplitude $A_0$ versetzt, wobei der erste und der zweite Schwingungsaufnehmer (5) derart ausgestaltet sind, dass sie im Betrieb die Schwingung des Messrohrs (3) erfassen, wobei der erste Schwingungsaufnehmer (5) die Schwingung als erstes Messsignal an die Steuer- und Auswerteeinheit (6) weiterleitet und wobei der zweite Schwingungsaufnehmer (5) die Schwingung als zweites Messsignal an die Steuer- und Auswerteeinheit (6) weiterleitet und wobei aus dem ersten Messsignal und/oder dem zweiten Messsignal wenigstens ein Vergleichsmesssignal (10) bestimmt wird,
   **dadurch gekennzeichnet,**
   **dass** die Steuer- und Auswerteeinheit (6) derart ausgestaltet ist, dass im Betrieb ausgehend von der Anregungsfrequenz $f_0$ und der Anregungsamplitude $A_0$ bei wenigstens einer Auswertefrequenz ein Erwartungswert der Amplitude und/oder der Phase und/oder wenigstens einer daraus abgeleiteten Größen bestimmt wird, wobei die Auswertefrequenz der Anregungsfrequenz $f_0$ und/oder wenigstens einer harmonischen Oberschwingung der Anregungsfrequenz $f_0$ entspricht,
   **dass** die Amplitude und/oder die Phase und/oder die daraus abgeleitete Größe des Vergleichsmesssignals (10) ausschließlich bei der Auswertefrequenz erfasst wird,
   **dass** der Erwartungswert der Amplitude und/oder der Phase und/oder der daraus abgeleiteten Größe mit dem entsprechenden Wert des Vergleichsmesssignals (10) verglichen und ein Maß für die Abweichung bestimmt wird und dass eine Meldung ausgegeben wird, wenn die Abweichung des Erwartungswertes mit dem entsprechenden Wert des Vergleichsmesssignals (10) einen oberen Grenzwert überschreitet oder einen unteren Grenzwert unterschreitet.

8. Coriolis-Massedurchflussmessgerät (2) nach Anspruch 7, **dadurch gekennzeichnet, dass** das Coriolis-Massedurchflussmessgerät (2) im Betrieb ein Verfahren (1) gemäß einem der Ansprüche 1 bis 6 durchführt.

## Claims

1. Method (1) for operating a Coriolis mass flowmeter (2), wherein the Coriolis mass flowmeter (2) comprises at least one measuring tube (3), at least one oscillation generator (4), at least two oscillation sensors (5), and at least one control and evaluation unit (2), wherein the oscillation generator (4) and the oscillation sensors (5) are arranged on the measuring tube (3), wherein the measuring tube (3) can have a medium flowing through it, wherein the oscillation generator (4) puts (7) the measuring tube (3) into a harmonic oscillation with the excitation frequency $f_0$ and the excitation amplitude $A_0$, wherein the first and the second oscillation sensors (5) detect the oscillation of the measuring tube (3) and wherein the first oscillation sensor (5) forwards (8) the oscillation to the control and evaluation unit (6) as first measuring signal and wherein the second oscillation sensor (5) forwards (8) the oscillation to the control and evaluation unit (6) as second measuring signal, and wherein at least one comparison measurement signal (10) is determined (9) from the first measuring signal and/or the second measuring signal, **characterized in that**, based on the excitation frequency $f_0$ and the excitation amplitude $A_0$ at at least one evaluation frequency, an expected value of the amplitude and/or phase and/or at least a variable derived therefrom is determined (18), wherein the evaluation frequency corresponds to the excitation frequency $f_0$ and/or at least to a harmonic of the excitation frequency $f_0$,
   **that** the amplitude and/or the phase and/or the variable derived therefrom of the comparison measurement signal (10) is detected (11, 14, 15, 19) exclusively at the evaluation frequency,
   **that** the expected value of the amplitude and/or the phase and/or the variable derived therefrom is compared to the corresponding value of the comparison measurement signal (10) and a measure for the deviation is determined (20), and

an alert is issued (17) when the deviation of the expected value with the corresponding value of the comparison measurement signal (10) exceeds an upper limit value or falls below a lower limit value.

2. Method (1) according to claim 1, **characterized in that** the at least one variable derived from the amplitude is the power and/or a value for the harmonic distortion (THD value) and/or a value for the harmonic distortion including the noise (THD + N value) and/or the distortion factor and/or the signal-to-noise ratio (SNR).

3. Method (1) according to claim 1 or 2, **characterized in that** the comparison measurement signal (10) is the first measuring signal or the second measuring signal or a sum signal of the first measuring signal and the second measuring signal, or a difference signal of the first and second measuring signals, or is another functional relationship between the first and the second measuring signals.

4. Method according to any one of claims 1 to 3, **characterized in that** more than one expected value of the amplitude and/or the phase and/or the variable derived therefrom is or are determined, and that the expected values of the amplitude and/or the phase and/or the variable derived therefrom, are compared simultaneously or chronologically successively to the corresponding values of the comparison measurement signal (10).

5. Method according to any one of claims 1 to 4, **characterized in that** at least one additional expected value of the amplitude and/or the phase and/or the variable derived therefrom is determined at an evaluation frequency; which lies in a frequency interval around the excitation frequency $f_0$, wherein the frequency interval ranges to around $\pm$ 20 to 50% of the excitation frequency around the excitation frequency $f_0$; and/or at an evaluation frequency, which lies in a frequency interval around the harmonic of the excitation frequency $f_0$, wherein the frequency interval ranges to around $\pm$ 20 to 50% of the frequency of the harmonic around the frequency of the harmonic; and that the amplitude and/or the phase and/or the variable derived therefrom of the comparison measurement signal (10) is detected at the evaluation frequency and to with the corresponding expected signal.

6. Method (1) according to any one of claims 1 to 5, **characterized in that** the determination of the expected value of the amplitude and/or the phase and/or the variable derived therefrom and the comparison to the corresponding values of the comparison measurement signal (10) occur periodically or are manually triggered.

7. Coriolis mass flowmeter (2) having at least one measuring tube (3), at least one oscillation generator (4), at least two oscillation sensors (5) and at least one control and evaluation unit (6), wherein the oscillation generator (4) and the oscillation sensors (5) are arranged on the measuring tube (3), wherein the oscillation generator (4) is designed such that it, during operating, puts the measuring tube (3) into a harmonic oscillation with the excitation frequency $f_0$ and the excitation amplitude $A_0$, wherein the first and the second oscillation sensors (5) are designed such that, during operation, they detect the oscillation of the measuring tube (3), wherein the first oscillation sensor (5) forwards the oscillation to the control and evaluation unit (6) as a first measuring signal, and wherein the second oscillation sensor (5) forwards the oscillation to the control and evaluation unit (6) as a second measuring signal, and wherein at least one comparison signal (10) is determined using the first measuring signal and/or the second measuring signal, **characterized in**

that the control and evaluation unit (6) is designed such that an expected value of the amplitude and/or the phase and/or at least one variable derived therefrom is determined based on the excitation frequency $f_0$ and the excitation amplitude $A_0$ at at least one evaluation frequency, wherein the evaluation frequency corresponds to the excitation frequency $f_0$ and/or to at least one harmonic of the excitation frequency $f_0$,

that the amplitude and/or the phase and/or the variable of the comparison measurement signal (10) derived therefrom is detected exclusively at the evaluation frequency,

that the expected value of the amplitude and/or the phase and/or the variable derived therefrom is compared to the corresponding value of the comparison measurement signal (10) and a measure for the deviation is determined, and that an alert is issued when the deviation of the expected value with the corresponding value of the comparison measurement signal (10) exceeds an upper limit value or falls below a lower limit value.

8. Coriolis mass flowmeter (2) according to claim 7, **characterized in that** the Coriolis mass flowmeter (2) carries out a method (1) according to any one of claims 1 to 6 during operation.

9

**Revendications**

1. Procédé (1) de fonctionnement d'un débitmètre massique à effet Coriolis (2), le débitmètre massique à effet Coriolis (2) comprenant au moins un tube de mesure (3), au moins un générateur de vibrations (4), au moins deux capteurs de vibrations (5) et au moins une unité de commande et d'évaluation (6), le générateur de vibrations (4) et les capteurs de vibrations (5) étant disposés au niveau du tube de mesure (3), un fluide pouvant s'écouler à travers le tube de mesure (3), le générateur de vibrations (4) déplaçant le tube de mesure (3) suivant une vibration harmonique ayant la fréquence d'excitation $f_0$ et l'amplitude d'excitation $A_0$ (7), le premier et le deuxième capteur de vibration (5) détectant la vibration du tube de mesure (3) et le premier capteur de vibration (5) transmettant la vibration sous la forme d'un premier signal de mesure à l'unité de commande et d'évaluation (6) et le deuxième capteur de vibrations (5) transmettant (8) la vibration sous la forme d'un deuxième signal de mesure à l'unité de commande et d'évaluation (6) et au moins un signal de mesure de comparaison (10) étant déterminé (9) à partir du premier signal de mesure et/ou du deuxième signal de mesure,
**caractérisé en ce que**
une valeur attendue de l'amplitude et/ou de la phase et/ou d'au moins une grandeur qui en dérive est déterminée en fonction de la fréquence d'excitation $f_0$ et de l'amplitude d'excitation $A_0$ pour au moins une fréquence d'évaluation (18), la fréquence d'évaluation correspondant à la fréquence d'excitation $f_0$ et/ou au moins à une vibration harmonique de la fréquence d'excitation $f_0$,
l'amplitude et/ou la phase et/ou la grandeur qui en dérive du signal de mesure de comparaison (10) sont détectées exclusivement à la fréquence d'évaluation (11, 14, 15, 19),
la valeur attendue de l'amplitude et/ou de la phase et/ou de la grandeur qui en dérive est comparée à la valeur correspondante du signal de mesure de comparaison (10) et une mesure de l'écart est déterminée (20) et un message est délivré (17) lorsque l'écart de la valeur attendue avec la valeur correspondante du signal de mesure de comparaison (10) dépasse une valeur limite supérieure ou tombe au-dessous d'une valeur limite inférieure.

2. Procédé (1) selon la revendication 1, **caractérisé en ce que** l'au moins une grandeur dérivée de l'amplitude est la puissance et/ou une valeur de la distorsion harmonique (valeur THD) et/ou une valeur de la distorsion harmonique incluant le bruit (valeur THD+N) et/ou le facteur de distorsion et/ou le rapport signal/bruit (SNR).

3. Procédé (1) selon la revendication 1 ou 2, **caractérisé en ce que** le signal de mesure de comparaison (10) est le premier signal de mesure ou le deuxième signal de mesure ou un signal de somme du premier signal de mesure et du deuxième signal de mesure ou un signal de différence du premier et du deuxième signal de mesure ou une autre relation fonctionnelle entre le premier et le deuxième signal de mesure.

4. Procédé (1) selon l'une des revendications 1 à 3, **caractérisé en ce que** plus d'une valeur attendue de l'amplitude et/ou de la phase et/ou de la grandeur qui en dérive sont déterminées et **en ce que** les valeurs attendues de l'amplitude et/ou de la phase et/ou de la grandeur qui en dérive sont comparées simultanément ou successivement aux valeurs correspondantes du signal de mesure de comparaison (10).

5. Procédé (1) selon l'une des revendications 1 à 4, **caractérisé en ce qu'**au moins une valeur attendue supplémentaire de l'amplitude et/ou de la phase et/ou de la grandeur qui en dérive est déterminée à une fréquence d'évaluation qui se situe dans un intervalle de fréquences autour de la fréquence d'excitation $f_0$, l'intervalle de fréquences s'étendant de $\pm 20$ à 50 % de la fréquence d'excitation autour de la fréquence d'excitation $f_0$, et/ou à une fréquence d'évaluation qui se situe dans un intervalle de fréquences autour de la vibration harmonique de la fréquence d'excitation $f_0$, l'intervalle de fréquences s'étendant de $\pm 20$ à 50 % de la fréquence de la vibration harmonique autour de la fréquence de la vibration harmonique, et **en ce que** l'amplitude et/ou la phase et/ou la grandeur qui en dérive du signal de mesure de comparaison (10) sont détectées à la fréquence d'évaluation et comparées au signal attendu correspondant.

6. Procédé (1) selon l'une des revendications 1 à 5, **caractérisé en ce que** la détermination de la valeur attendue de l'amplitude et/ou de la phase et/ou de la grandeur qui en dérive et la comparaison avec la valeur correspondante du signal de mesure de comparaison (10) sont effectuées périodiquement ou déclenchées manuellement.

7. Débitmètre massique à effet Coriolis (2) comprenant au moins un tube de mesure (3), au moins un générateur de vibrations (4), au moins deux capteurs de vibrations (5) et au moins une unité de commande et d'évaluation (6), le générateur de vibrations (4) et les capteurs de vibrations (5) étant disposés au niveau du tube de mesure (3), le générateur de vibrations (4) étant conçu de façon à déplacer le tube de mesure (3) suivant une vibration harmonique ayant la fréquence d'excitation $f_0$ et l'amplitude d'excitation $A_0$, les premier et deuxième capteurs de vibration (5) étant conçus de façon à détecter la vibration du tube de mesure (3) pendant le fonctionnement, le premier capteur de vibration (5) transmettant la vibration sous la forme d'un premier signal de mesure à l'unité de commande et d'évaluation (6) et le deuxième capteur de vibration (5) transmettant la vibration sous la forme d'un deuxième signal de mesure à l'unité de commande et d'évaluation (6) et au moins un signal de mesure de comparaison (10) étant déterminé à partir du premier signal de mesure et/ou du second signal de mesure,

**caractérisé en ce que**

l'unité de commande et d'évaluation (6) est conçue de façon à déterminer une valeur attendue de l'amplitude et/ou de la phase et/ou d'au moins une grandeur qui en dérive en fonctionnement sur la base de la fréquence d'excitation $f_0$ et de l'amplitude d'excitation $A_0$ pour au moins une fréquence d'évaluation, la fréquence d'évaluation correspondant à la fréquence d'excitation $f_0$ et/ou au moins d'une vibration harmonique de la fréquence d'excitation $f_0$,

l'amplitude et/ou la phase et/ou la grandeur qui en dérive du signal de mesure de comparaison (10) sont détectées exclusivement à la fréquence d'évaluation,

la valeur attendue de l'amplitude et/ou de la phase et/ou de la grandeur qui en dérive est comparée à la valeur correspondante du signal de mesure de comparaison (10) et une mesure de l'écart est déterminée et

un message est délivré lorsque l'écart de la valeur attendue avec la valeur correspondante du signal de mesure de comparaison (10) dépasse une valeur limite supérieure ou tombe au-dessous d'une valeur limite inférieure.

8. Débitmètre massique à effet Coriolis (2) selon la revendication 7, **caractérisé en ce que** le débitmètre massique à effet Coriolis (2) met en œuvre un procédé (1) selon l'une des revendications 1 à 6 en cours de fonctionnement.

Fig. 1

Fig. 2

2

6

21 · · · · · 10

4

5 · · · · · 5

3

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008059920 A1
- DE 102011086395 A1
- WO 9939164 A1